# EUROPÄISCHE PATENTSCHRIFT

(11) **EP 2 923 887 B1**
(45) Veröffentlichungstag und Bekanntmachung des Hinweises auf die Patenterteilung: **05.12.2018**
(21) Anmeldenummer: 15160842.9
(22) Anmeldetag: 25.03.2015
(51) Int. Cl.: B60P 1/00, B60P 3/42, B62D 21/16

(54) **Fahrzeug zum Transport von Flüssigkeiten und/oder Feststoffen**
VEHICLE FOR TRANSPORTING LIQUIDS AND/OR SOLIDS
VÉHICULE DE TRANSPORT DE LIQUIDES ET/OU DE MATIÈRES SOLIDES

(30) Priorität: 26.03.2014 DE 202014101421 U
(43) Veröffentlichungstag der Anmeldung: 30.09.2015
(73) Patentinhaber: Fliegl jun., Josef, 84453 Mühldorf am Inn (DE)
(72) Erfinder: FLIEGL sen., Josef, 84556 Kastl (DE)
(74) Vertreter: Tetzner, Michael

(56) Entgegenhaltungen:
- DE-U1- 29 503 206
- DE-U1-202007 010 966
- DE-U1-202009 017 639
- DE-U1-202012 104 724
- FR-A- 795 123

## Beschreibung

Die Erfindung betrifft ein Fahrzeug zum Transport von Flüssigkeiten und/oder Feststoffen mit wenigstens einem ersten Flüssigkeitstank und wenigstens einem Feststoffbehälter.

Aus der DE 20 2009 017 639 U1 ist ein Fahrzeugaufbau zum Transport von Flüssigkeiten und/oder Feststoffen bekannt, wobei ein Flüssigkeitstank auf dem Chassis befestigt ist und oberhalb des Flüssigkeitstanks zumindest ein Feststoffbehälter kippbar angeordnet ist. Durch diese Anordnung muss eine relativ große Gesamthöhe des Fahrzeugs in Kauf genommen werden und auch die Füllvolumina von Flüssigkeitstank und Feststoffbehälter sind entsprechend eingeschränkt. Außerdem gestaltet sich der Kippmechanismus für den oberhalb des Flüssigkeitstanks angeordneten Feststoffbehälters entsprechend aufwendig. Nachteilig ist bei vielen Anwendungen auch der zum Kippen benötigte Freiraum oberhalb des Fahrzeuges.

In der DE 20 2007 010 966 U1 wird ein Transportfahrzeug mit einem Fahrzeugrahmen, einem Fahrwerk und einem Aufbau beschrieben, wobei der untere Teil des Aufbaus durch einen Transporttank für flüssige Transportgüter und der obere Teil durch eine Transportmulde für feste Transportgüter gebildet wird.

Weitere Fahrzeuge zum kombinierten Transport von Stückgut und Flüssigkeiten sind aus der DE 295 03 206 U1 und der FR 795 123 A bekannt. Ein Abschiebewagen zum Transport von heißem Gut, insbesondere zum Transport von Asphalt wird in der DE 20 2012 104 724 U1 offenbart.

Die Erfindung lag daher die Aufgabe zugrunde, das Fahrzeug zum Transport von Flüssigkeiten und/oder Feststoffen mit wenigstens einem ersten Flüssigkeitstank und wenigstens einem Feststoffbehälter dahingehend weiterzuentwickeln, dass der vorhandene Bauraum optimal ausgenutzt wird und dennoch eine einfache Entlademöglichkeit für den Feststoffbehälter vorgesehen ist.

Erfindungsgemäß wird diese Aufgabe durch die Merkmale des Anspruches 1 gelöst. Vorteilhafte Ausgestaltungen sind in den weiteren Ansprüchen beschrieben.

Das erfindungsgemäße Fahrzeug zum Transport von Flüssigkeiten und/oder Feststoffen weist wenigstens einen ersten Flüssigkeitstank und wenigstens einen Feststoffbehälter, einen Fahrzeugrahmen und ein Fahrgestell auf. Der erste Flüssigkeitstank ist dabei integraler Bestandteil des Fahrzeugrahmens und der Feststoffbehälter weist eine Entladeöffnung sowie eine Austragseinrichtung zur Selbstentladung der Feststoffe auf.

Durch die Ausbildung des Flüssigkeitstanks als integraler Bestandteil des Fahrzeugrahmens kann der vorhandene Bauraum optimal ausgenutzt werden, sodass das gesamte Ladevolumen bei gleicher Fahrzeughöhe entsprechend vergrößert werden kann. Außerdem kann der Flüssigkeitstank weiter unten angeordnet werden, sodass mehr Bauraum für den wenigstens einen Feststoffbehälter zur Verfügung steht. Durch die Integration des Flüssigkeitstanks in den Fahrzeugrahmen kann außerdem das Eigengewicht des Fahrzeuges reduziert werden. Ferner bekommt das Fahrzeug einen tieferen Schwerpunkt, was sich vor allem auf die Straßenlage positiv auswirkt.

Gemäß einer bevorzugten Ausgestaltung der Erfindung weist die Austragseinrichtung einen Schubboden, einen Kratzboden oder eine in Richtung der Entladeöffnung verschiebbare Abschiebewand auf. Eine Ausbildung der Austrageinrichtung als Kippeinrichtung ist auch denkbar. Weiterhin ist die Entladeöffnung an einem rückwärtigen Ende des Fahrzeugs angeordnet ist.

Das Vorsehen einer Abschiebewand zum Austrag der Feststoffe hat den Vorteil, dass ein Austrag der Feststoffe auch dann möglich ist, wenn oberhalb des Fahrzeugs kein ausreichender Freiraum für ein Kippen des Feststoffbehälters vorhanden ist.

Der Feststoffbehälter wird vorzugsweise durch einen, zwei Seitenwände, eine im Bereich der Entladeöffnung angeordnete, vorzugsweise verschwenkbar ausgebildete Rückwand und die Abschiebewand begrenzt. Im Bedarfsfall kann zusätzlich noch eine Abdeckung vorgesehen werden, um das Gut vor Umwelteinflüssen von oben zu schützen.

In einer bevorzugten Ausgestaltung der Erfindung ist die Austragseinrichtung zweistufig ausgebildet, wobei eine erste Stufe durch einen Schiebeboden gebildet wird, der zusammen mit der Abschiebewand in Richtung der Entladeöffnung verschiebbar ist und die zweite Stufe durch die Abschiebewand gebildet wird, die relativ zum Schiebeboden verschiebbar ist.

Um den vorhandenen Bauraum optimal ausnutzen zu können, wird der erste Flüssigkeitstank nach oben durch den Fahrzeugboden begrenzt, der gleichzeitig auch wenigstens einen Teil des Bodens des Feststoffbehälters bildet. Der Feststoffbehälter ist daher zweckmäßig auf dem ersten Flüssigkeitstank angeordnet.

Sofern das Füllvolumen des ersten Flüssigkeitstanks nicht ausreicht, kann wenigstens ein zweiter und ggf. ein dritter Flüssigkeitstank im vorderen Bereich des Fahrzeugs angeordnet werden. Dabei bietet es sich beispielsweise an, den zweiten und ggf. den dritten Flüssigkeitstank im vorderen Bereich des Fahrzeugs auf dem ersten Flüssigkeitstank anzuordnen, wobei der erste und der wenigstens eine zweite bzw. dritte Flüssigkeitstank zur Übertragung von Flüssigkeit miteinander in Verbindung stehen können.

Gemäß einer weiteren Ausgestaltung der Erfindung ist quer zur Fahrzeuglängsachse zwischen dem zweiten und dem dritten Flüssigkeitstank ein Freiraum vorgesehen, wobei die Austragseinrichtung eine Antriebseinrichtung umfasst, die teilweise in diesem Freiraum hineinragt. Dadurch ergibt sich eine besonders kompakte Anordnung die den vorhandenen Bauraum optimal ausnutzt. Zum Befüllen der Flüssigkeitstanks weist der zweite und/oder dritte Flüssigkeitstank zweckmäßigerweise eine Einfüllöffnung auf, wobei der zweite und/oder dritte Flüssigkeitstank über wenigstens eine Verbindungsöffnung mit dem ersten Flüssigkeitstank in Verbindung steht. Des Weiteren kann der erste Flüssigkeitstank wenigstens eine Auslauföffnung am hinteren Ende des Fahrzeugs aufweisen. Der erste Flüssigkeitstank ist zu diesem Zweck so konzipiert, dass die Auslauföffnung bei einem auf einer horizontal ausgerichteten Fläche abgestellten Fahrzeug am tiefsten Punkt angeordnet ist und auf diese Weise eine einfache und schnelle Entleerung möglich ist. Das Fahrzeug ist vorzugsweise als Anhänger, insbesondere als Sattelauflieger, ausgebildet. Eine Ausbildung als Lastkraftwagen ist aber auch denkbar.

Weitere Ausgestaltungen der Erfindung werden anhand der nachfolgenden Beschreibung und der Zeichnung näher erläutert.

In den Zeichnungen zeigen
- Fig. 1: eine dreidimensionale Darstellung des Fahrzeugs zum Transport von Flüssigkeiten und/oder Feststoffen,
- Fig. 2: eine Seitenansicht des Fahrzeugs gemäß Fig. 1,
- Fig. 3: eine Draufsicht des Fahrzeugs gemäß Fig. 1,
- Fig. 4: eine schematische Schnittdarstellung längs der Linie IV-IV der Fig. 2 und
- Fig. 5: eine schematische Schnittdarstellung längs der Linie V-V der Fig. 2.

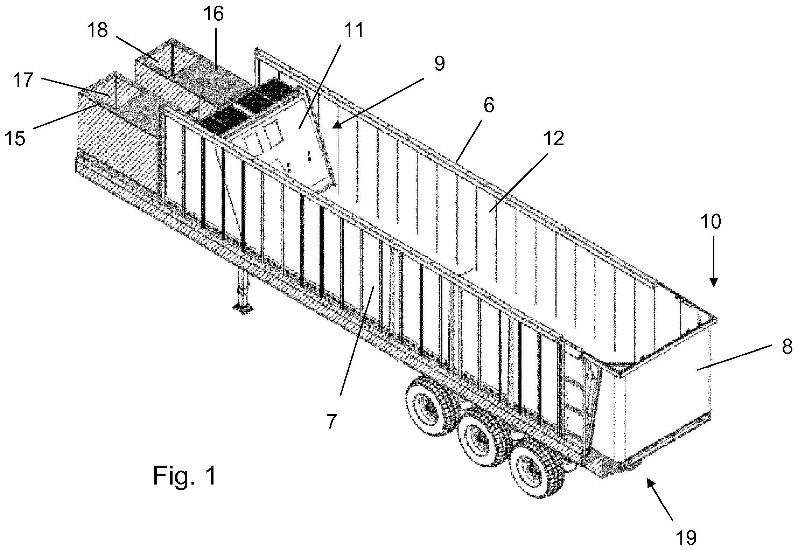

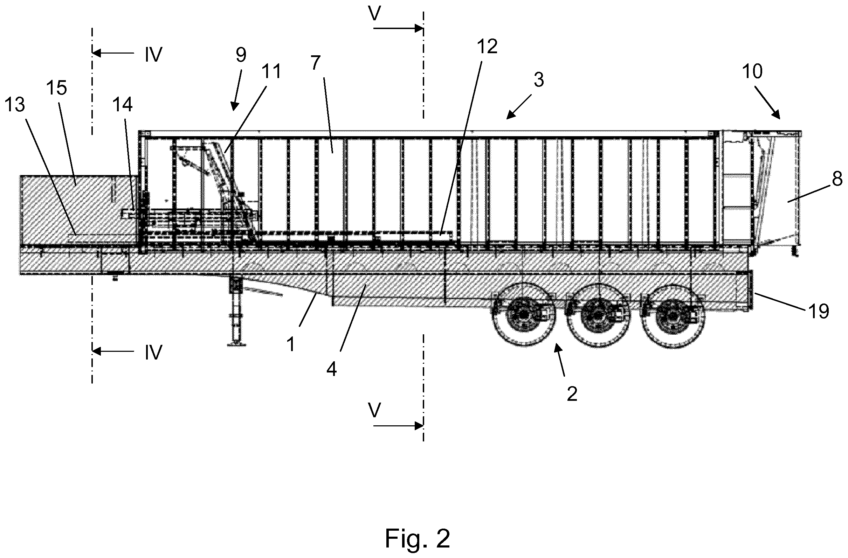

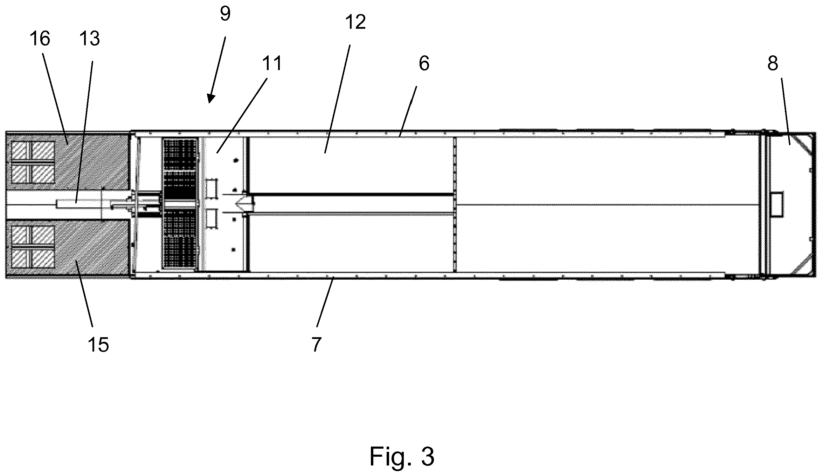

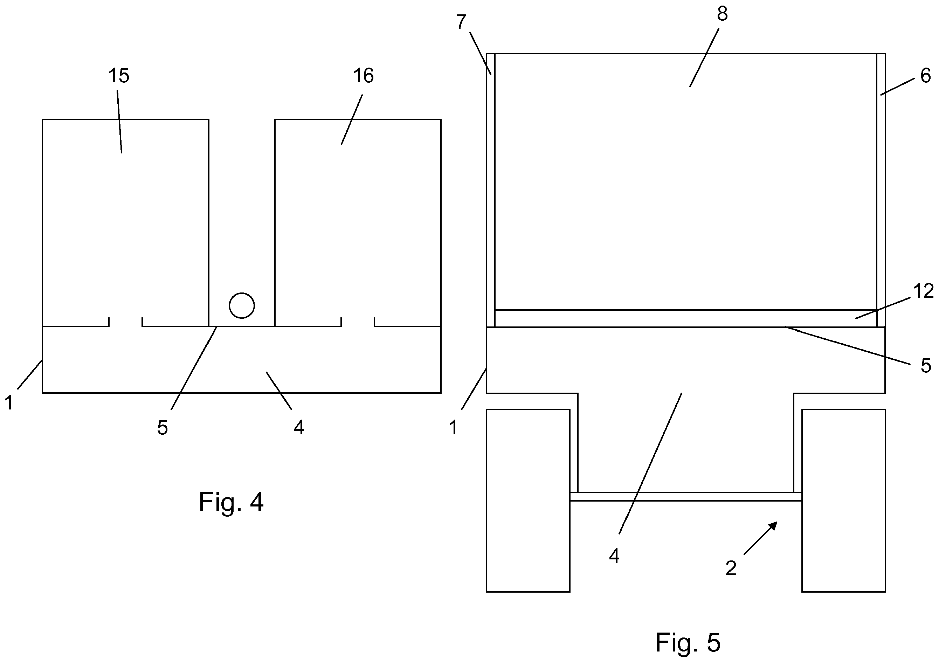

Bei dem in den Figuren 1 bis 5 dargestellten Fahrzeug handelt es sich um einen Anhänger, insbesondere einen Sattelauflieger, der einen Fahrzeugrahmen 1, ein Fahrgestell 2 und einen Feststoffbehälter 3 umfasst. Weiterhin ist ein erster Flüssigkeitstank 4 vorgesehen, der als integraler Bestandteil des Fahrzeugrahmens 1 ausgebildet ist. Aus den schematischen Schnittdarstellungen der Figuren 4 und 5 ist ersichtlich, dass der Fahrzeugrahmen 1 gleichzeitig die Wandungen des ersten Flüssigkeitstanks 4 bildet. Der obere Abschluss des Flüssigkeitstanks 4 wird durch den Fahrzeugboden 5 gebildet, der gleichzeitig auch einen Teil des Bodens des Feststoffbehälters 3 bildet.

Der Feststoffbehälter weist neben dem durch den Fahrzeugboden 5 gebildeten Boden zwei Seitenwände 6, 7, eine durch eine verschwenkbar ausgebildete Rückwand 8 verschlossene Entladeöffnung 10 sowie eine Austragseinrichtung 9 zum Austrag der Feststoffe auf. Die Austragseinrichtung 9 umfasst eine in Richtung der Entladeöffnung verschiebbare Abschiebewand 11. Weiterhin ist die Austragseinrichtung zweistufig ausgebildet, wobei die erste Stufe durch einen Schiebeboden 12 gebildet wird, der zusammen mit der Abschiebewand 11 in Richtung der Entladeöffnung 10 verschiebbar ist. Die zweite Stufe wird durch die Abschiebewand 11 gebildet, die relativ zum Schiebeboden verschiebbar ist. Ist der Feststoffbehälter 3 vollständig beladen, befindet sich die Schiebewand 11 in der in den Figuren 1 bis 3 gezeigten Stellung. Zum Austrag der Feststoffe wird zunächst die Entladeöffnung 10 durch Hochklappen der Rückwand 8 freigegeben. Sodann wird zunächst der Schiebeboden 12 zusammen mit der Abschiebwand 11 in Richtung der Entladeöffnung 10 verschoben, bis die der Entladeöffnung 10 zugewandte, vordere Kante des Schiebebodens 12 an der Entladeöffnung angekoppelt ist. Für den weiteren Austrag wird dann die Schiebewand 11 relativ zum stillstehenden Schiebeboden 12 in Richtung der Entladeöffnung 10 verschoben. Für die Verschiebung des Schiebebodens 12 bzw. der Abschiebewand 11 sind im dargestellten Ausführungsbeispiel jeweils eine separate Antriebseinrichtung 13, 14 vorgesehen, die hier jeweils durch Hydraulikzylinder gebildet werden. Es sind aber auch durchaus andere Antriebseinrichtungen, wie beispielsweise ein Antrieb mit umlaufenden Ketten oder Seile denkbar.

In Fahrrichtung vor dem Feststoffbehälter 3 sind auf den Fahrzeugboden 5 ein zweiter und dritter Flüssigkeitstank 15, 16 angeordnet. Auf diese Weise kann das Füllvolumen für die Flüssigkeit entsprechend erhöht werden. Zwischen diesen beiden Flüssigkeitstanks 15, 16 ist ein Freiraum vorgesehen, in den wenigstens eine der Antriebseinrichtungen 13, 14 hineinragen. Sowohl der zweite als auch der dritte Flüssigkeitstank 15, 16 ist jeweils mit einer Einfüllöffnung 17, 18 versehen, über welche die Flüssigkeit eingefüllt werden kann. Der zweite und dritte Flüssigkeitstank sind über entsprechende, nicht näher dargestellte Verbindungsöffnungen mit dem erste Flüssigkeitstank 4 verbunden. Zum Ablassen der in den Flüssigkeitstanks enthaltenen Flüssigkeit ist eine Auslassöffnung 19 am hinteren Ende des Fahrzeugs vorgesehen.

## Patentansprüche

1. Fahrzeug zum Transport von Flüssigkeiten und/oder Feststoffen, insbesondere Schüttgut mit wenigstens einem ersten Flüssigkeitstank (4) und wenigstens einem Feststoffbehälter (3), einem Fahrzeugrahmen (1) und einem Fahrgestell (2), wobei der Feststoffbehälter eine Entladeöffnung sowie eine Austragseinrichtung (9) zur Selbstentladung der Feststoffe aufweist,
**dadurch gekennzeichnet, dass** der erste Flüssigkeitstank (4) integraler Bestandteil des Fahrzeugrahmens (1) ist.

2. Fahrzeug nach Anspruch 1, **dadurch gekennzeichnet, dass** eine Austragseinrichtung (9) eine in Richtung der Entladeöffnung (10) verschiebbare Abschiebewand (11) umfasst.

3. Fahrzeug nach Anspruch 1, **dadurch gekennzeichnet, dass** der Feststoffbehälter (3) durch einen Boden, zwei Seitenwände (6, 7), eine im Bereich der Entladeöffnung (10) angeordnete, vorzugsweise verschwenkbar ausgebildete Rückwand (8), und die Abschiebewand (11) begrenzt wird.

4. Fahrzeug nach Anspruch 3, **dadurch gekennzeichnet, dass** die Austragseinrichtung (9) 2-stufig ausgebildet ist, wobei eine 1. Stufe durch einen Schiebeboden (12) gebildet wird, der zusammen mit der Abschiebewand (11) in Richtung der Entladeöffnung (10) verschiebbar ist und die 2. Stufe durch die Abschiebewand (11) gebildet wird, die relativ zum Schiebeboden (12) verschiebbar ist.

5. Fahrzeug nach Anspruch 1, **gekennzeichnet durch** einen als Teil des ersten Flüssigkeitstanks (4) ausgebildeten Fahrzeugboden (5), der gleichzeitig auch wenigstens einen Teil des Bodens des Feststoffbehälters (2) bildet.

6. Fahrzeug nach Anspruch 1, **dadurch gekennzeichnet, dass** der Feststoffbehälter (2) auf dem ersten Flüssigkeitstank (4) angeordnet ist.

7. Fahrzeug nach Anspruch 1, **dadurch gekennzeichnet, dass** wenigstens ein zweiter Flüssigkeitstank (15, 16) im vorderen Bereich des Fahrzeugs auf dem ersten Flüssigkeitstank (4) angeordnet ist.

8. Fahrzeug nach Anspruch 1, **dadurch gekennzeichnet, dass** ein zweiter und ein dritter Flüssigkeitstank (15, 16) im vorderen Bereich des Fahrzeugs auf dem ersten Flüssigkeitstank (4) angeordnet sind.

9. Fahrzeug nach Anspruch 7 oder 8, **dadurch gekennzeichnet, dass** der erste und der wenigstens eine zweite Flüssigkeitstank (4, 15, 16) zur Übertragung von Flüssigkeit miteinander in Verbindung stehen.

10. Fahrzeug nach Anspruch 8 oder 9, **dadurch gekennzeichnet, dass** quer zur Fahrzeuglängsachse zwischen dem zweiten und dem dritten Flüssigkeitstank (15, 16) ein Freiraum vorgesehen ist und die Austragseinrichtung (9) wenigstens eine Antriebseinrichtung (13, 14) umfasst, die teilweise in diesen Freiraum hineinragt.

11. Fahrzeug nach Anspruch 7, **dadurch gekennzeichnet, dass** der zweite und/oder dritte Flüssigkeitstank (15, 16) vor dem Feststoffbehälter (3) auf dem ersten Flüssigkeitstank (4) angeordnet sind.

12. Fahrzeug nach Anspruch 7, **dadurch gekennzeichnet, dass** der zweite und/oder dritte Flüssigkeitstank (15, 16) wenigstens eine Einfüllöffnung (17, 18) aufweist und über wenigstens eine Verbindungsöffnung mit dem ersten Flüssigkeitstank in Verbindung steht.

13. Fahrzeug nach Anspruch 1, **dadurch gekennzeichnet, dass** der erste Flüssigkeitstank (4) wenigstens eine Auslauföffnung (19) am hinteren Ende des Fahrzeugs aufweist.

14. Fahrzeug nach Anspruch 1, **dadurch gekennzeichnet, dass** Fahrzeug als Anhänger, insbesondere als Sattelauflieger, ausgebildet ist.

15. Fahrzeug nach Anspruch 1, **dadurch gekennzeichnet, dass** die Entladeöffnung an einem rückwärtigen Ende des Fahrzeugs angeordnet ist.

## Claims

1. A vehicle for the transport of liquids and/or solids, especially bulk goods, with at least a first liquids tank (4) and at least one solids container (3), a vehicle frame (1) and a chassis (2), whereby the solids container has an unloading opening as well as a discharge mechanism (9) for self-unloading of the solids,
**characterized in that** the first liquids tank (4) is an integral part of the vehicle frame (1).

2. The vehicle according to claim 1, **characterized in that** a discharge mechanism (9) comprises a push-off wall (11) able to move in the direction of the unloading opening (10).

3. The vehicle according to claim 1, **characterized in that** the solids container (3) is bounded by a floor, two side walls (6, 7), a rear wall (8) arranged in the area of the unloading opening (10), preferably able to pivot, and the push-off wall (11).

4. The vehicle according to claim 3, **characterized in that** the discharge mechanism (9) is designed as a two-stage one, a first stage being formed by a sliding floor (12), which together with the push-off wall (11) can move in the direction of the unloading opening (10), and the second stage is formed by the push-off wall (11), which can move relative to the sliding floor (12).

5. The vehicle according to claim 1, **characterized by** a vehicle floor (5) fashioned as part of the first liquids tank (4), which at the same time also forms part of the floor of the solids container (2).

6. The vehicle according to claim 1, **characterized in that** the solids container (2) is arranged on the first liquids tank (4).

7. The vehicle according to claim 1, **characterized in that** at least one second liquids tank (15, 16) is arranged in the front region of the vehicle on the first liquids tank (4).

8. The vehicle according to claim 1, **characterized in that** a second and a third liquids tank (15, 16) is arranged in the front region of the vehicle on the first liquids tank (4).

9. The vehicle according to claim 7, **characterized in that** the first and the at least one second liquids tank (4, 15, 16) are in communication with each other for the transfer of liquid.

10. The vehicle according to claim 8 or 9, **characterized in** a free space is provided between the second and the third liquids tank (15, 16) transversely to the lengthwise axis of the vehicle and the discharge mechanism (9) has at least one driving mechanism (13, 14) which partly protrudes in this free space.

11. The vehicle according to claim 7, **characterized in that** the second and/or the third liquids tank (15, 16) are arranged in front of the solids container (3) on the first liquids tank (4).

12. The vehicle according to claim 7, **characterized in that** the second and/or the third liquids tank (15, 16) has at least one fill opening (17, 18) and is in communications with the first liquids tank by at least one connection opening.

13. The vehicle according to claim 1, **characterized in that** the first liquids tank (4) has at least one outlet opening (19) at the rear end of the vehicle.

14. The vehicle according to claim 1, **characterized in that** the vehicle is designed as a trailer, especially a semitrailer.

15. The vehicle according to claim 1, **characterized in that** the unloading opening is arranged at a rear end of the vehicle.

## Revendications

1. Véhicule de transport de liquides et/ou de matières solides, en particulier de matières en vrac, ledit véhicule comprenant au moins une première cuve pour liquides (4) et au moins un conteneur pour matières solides (3), un cadre de véhicule (1) et un châssis (2), où le conteneur pour matières solides présente une ouverture de déchargement ainsi qu'un dispositif de déversement (9) servant au déchargement automatique des matières solides,
**caractérisé en ce que** la première cuve pour liquides (4) fait partie intégrante du cadre de véhicule (1).

2. Véhicule selon la revendication 1, **caractérisé en ce qu'**un dispositif de déversement (9) comprend un panneau coulissant (11) pouvant coulisser en direction de l'ouverture de déchargement (10).

3. Véhicule selon la revendication 1, **caractérisé en ce que** le conteneur pour matières solides (3) est délimité par un fond, par deux panneaux latéraux (6, 7), par un panneau arrière (8) disposé dans la zone de l'ouverture de déchargement (10) et configuré de préférence de manière à pouvoir basculer, et délimité par le panneau coulissant (11).

4. Véhicule selon la revendication 3, **caractérisé en ce que** le dispositif de déversement (9) est configuré en étant à 2 étages, où un 1^{er} étage est formé par un fond coulissant (12) qui peut coulisser en même temps que le panneau coulissant (11), en direction de l'ouverture de déchargement (10), et le 2^{ème} étage est formé par le panneau coulissant (11) qui peut coulisser par rapport au fond coulissant (12).

5. Véhicule selon la revendication 1, **caractérisé par** un fond de véhicule (5) configuré comme faisant partie de la première cuve pour liquides (4), fond de véhicule qui forme aussi, en même temps, une partie du fond du conteneur pour matières solides (3).

6. Véhicule selon la revendication 1, **caractérisé en ce que** le conteneur pour matières solides (3) est disposé sur la première cuve pour liquides (4).

7. Véhicule selon la revendication 1, **caractérisé en ce qu'**au moins une deuxième cuve pour liquides (15, 16) est disposée sur la première cuve pour liquides (4), dans la zone située à l'avant du véhicule.

8. Véhicule selon la revendication 1, **caractérisé en ce qu'**une deuxième et une troisième cuve pour liquides (15, 16) sont disposées sur la première cuve pour liquides (4), dans la zone située à l'avant du véhicule.

9. Véhicule selon la revendication 7 ou 8, **caractérisé en ce que** la première et la deuxième cuve pour liquides (4, 15, 16) au moins au nombre de un sont en communication fluidique entre elles, pour le transfert de liquide.

10. Véhicule selon la revendication 8 ou 9, **caractérisé en ce qu'**il est prévu, de façon transversale par rapport à l'axe longitudinal du véhicule, un espace libre situé entre la deuxième et la troisième cuve pour liquides (15, 16), et le dispositif de déversement (9) comprend au moins un dispositif d'entraînement (13, 14) qui pénètre au moins partiellement dans cet espace libre.

11. Véhicule selon la revendication 7, **caractérisé en ce que** la deuxième et/ou la troisième cuve pour liquides (15, 16) sont disposées sur la première cuve pour liquides (4), en amont du conteneur pour matières solides (3).

12. Véhicule selon la revendication 7, **caractérisé en ce que** la deuxième et/ou la troisième cuve pour liquides (15, 16) présente au moins une ouverture de remplissage (17, 18) et est en communication fluidique avec la première cuve pour liquides, par au moins une ouverture de communication.

13. Véhicule selon la revendication 1, **caractérisé en ce que** la première cuve pour liquides (4) présente au moins une ouverture de sortie (19) placée au niveau de l'extrémité située à l'arrière du véhicule.

14. Véhicule selon la revendication 1, **caractérisé en ce que** le véhicule est configuré comme une remorque, en particulier comme une semi-remorque.

15. Véhicule selon la revendication 1, **caractérisé en ce que** l'ouverture de déchargement est disposée au niveau d'une extrémité située à l'arrière du véhicule.
